# EUROPÄISCHE PATENTANMELDUNG

(11) **EP 4 779 198 A1**
(43) Veröffentlichungstag der Anmeldung: **22.07.2026**
(21) Anmeldenummer: 26152420.1
(22) Anmeldetag: 16.01.2026
(51) Int. Cl.: F16N 29/00, F16N 39/02, F16N 39/04

(54) **VERFAHREN ZUM BETRIEB EINES SYSTEMS ZUR SCHMIERUNG MINDESTENS EINER SCHMIERSTELLE UND SYSTEM ZUR SCHMIERUNG MINDESTENS EINER SCHMIERSTELLE**

(30) Priorität: 20.01.2025 DE 102025101756
(71) Anmelder: Eugen Woerner GmbH & Co. KG Zentralschmieranlagen, 97877 Wertheim (DE)
(72) Erfinder: Reiner, Christian, 97855 Triefenstein (DE); Reif, Nicolas Julian, 97877 Wertheim (DE)
(74) Vertreter: DREISS Patentanwälte PartG mbB

(57) **Zusammenfassung**

Die Erfindung betrifft ein Verfahren zum Betrieb eines Systems zur Schmierung mindestens einer Schmierstelle, umfassend einen Vorratsbehälter (14) zur Bevorratung von Schmiermittel (18), eine Leitung zur Führung des Schmiermittels (32) von dem Vorratsbehälter zu der Schmierstelle (28, 30), eine Pumpe (16) zur Förderung des Schmiermittels von dem Vorratsbehälter zu der Schmierstelle, eine Temperiereinrichtung (22) zur Temperierung des in dem Vorratsbehälter bevorrateten Schmiermittels, einen Temperatursensor (24) zur Erfassung einer Temperatur des Schmiermittels, und eine mit dem Temperatursensor gekoppelte Steuereinrichtung (20) zur Steuerung der Temperiereinrichtung, wobei das System mindestens einen Zusatzsensor (40) umfasst, der mit der Steuereinrichtung gekoppelt ist und mindestens einen von der Temperatur des Schmiermittels abweichenden Systemparameter des Systems erfasst, wobei sich der Systemparameter während des Betriebs des Systems in Abhängigkeit eines Betriebszustands des Systems und/oder von Umgebungsbedingungen des Systems ändert.

## Beschreibung

Die Erfindung betrifft ein Verfahren zum Betrieb eines Systems zur Schmierung mindestens einer Schmierstelle und ein System zur Schmierung mindestens einer Schmierstelle, wobei das System einen Vorratsbehälter zur Bevorratung von Schmiermittel, eine Leitung zur Führung des Schmiermittels von dem Vorratsbehälter zu der Schmierstelle, eine Pumpe zur Förderung des Schmiermittels von dem Vorratsbehälter zu der Schmierstelle, eine Temperiereinrichtung zur Temperierung des in dem Vorratsbehälter bevorrateten Schmiermittels, einen Temperatursensor zur Erfassung einer Temperatur des Schmiermittels, eine mit dem Temperatursensor gekoppelte Steuereinrichtung zur Steuerung der Temperiereinrichtung, und mindestens einen mit der Steuereinrichtung gekoppelten Zusatzsensor zur Erfassung eines von der Temperatur des Schmiermittels abweichenden Systemparameters des Systems, der sich während des Betriebs des Systems in Abhängigkeit eines Betriebszustands des Systems und/oder von Umgebungsbedingungen des Systems ändert, umfasst.

Die Viskosität und damit auch die Fördereigenschaften eines Schmiermittels sind üblicherweise von der Temperatur des Schmiermittels abhängig. Beispielsweise führt eine niedrigere Temperatur im Allgemeinen zu einer höheren Viskosität des Schmiermittels, d.h. zu einem zähflüssigeren Fließverhalten. Bei einem Schmiermittel mit hoher Viskosität sind eine innere Reibung des Schmiermittels und ein Reibungswiderstand des Schmiermittels relativ zu einer Begrenzungsfläche einer Schmierleitung größer als bei einem Schmiermittel mit niedriger Viskosität. Die Förderung eines höherviskosen Schmiermittels bedingt daher einen erhöhten Energieverbrauch.

Üblicherweise kann durch Erwärmung des Schmiermittels dessen Viskosität reduziert werden, d.h. dessen Fließfähigkeit verbessert werden. Entsprechende Heizeinrichtungen können wahlweise in das Schmiersystem integriert sein, beispielsweise als Heizpatrone oder als Flächenheizung, oder extern bereitgestellt werden. Zur Erwärmung wird Energie benötigt. Allerdings kann auch eine zu niedrige Viskosität des Schmiermittels nachteilig sein, beispielsweise wenn eine Bindung innerhalb des Schmiermittels zu schwach ist, um ein Herausfließen des Schmiermittels aus einer Dosiereinrichtung zu verhindern.

Der Erfindung liegt die Aufgabe zugrunde, ein besonders energieeffizientes Verfahren zum Betrieb eines Systems zur Schmierung mindestens einer Schmierstelle und ein solches System bereitzustellen.

Diese Aufgabe wird bei einem Verfahren der eingangs genannten Art dadurch gelöst, dass die Steuereinrichtung die Temperiereinrichtung bei einem durch den mindestens einen Zusatzsensor erfassten Wert, der innerhalb der in der Steuereinrichtung hinterlegten zulässigen Werten des mindestens einen Systemparameters liegt, so steuert, dass der durch den mindestens einen Zusatzsensor erfasste Wert den zulässigen Wertebereich verlässt, wobei die Steuereinrichtung die Temperiereinrichtung anschließend so steuert, dass der Wert des mindestens einen Zusatzsensors wieder den zulässigen Bereich erreicht, und/oder dass die Steuereinrichtung die Temperiereinrichtung bei einem durch den mindestens einen Zusatzsensor erfassten Wert, der außerhalb der in der Steuereinrichtung hinterlegten zulässigen Werten des mindestens einen Systemparameters liegt, so steuert, dass der Wert des mindestens einen Zusatzsensors den zulässigen Bereich erreicht, und dass ausgehend von der Abweichung von den zulässigen Werten des mindestens einen Systemparameters eine erstmalige Erfassung eines zulässigen Werts des mindestens einen Systemparameters die Erfassung eines aktuellen Temperaturwerts des Schmiermittels durch den Temperatursensor auslöst, und dass der aktuelle Temperaturwert in der Steuereinrichtung als Temperaturreferenzwert gespeichert wird.

Erfindungsgemäß ist der Zusatzsensor mit derselben Steuereinrichtung gekoppelt, mit welcher auch der Temperatursensor gekoppelt ist. Etwaige Veränderungen eines Werts des Systemparameters, die während des Betriebs auftreten, werden durch den Zusatzsensor erfasst und an die Steuereinrichtung kommuniziert. In der Steuereinrichtung werden die Werte des Systemparameters verarbeitet, sodass die Steuereinrichtung die Temperiereinrichtung unter Berücksichtigung der Werte des Systemparameters ansteuern kann.

Weiter erfindungsgemäß vergleicht die Steuereinrichtung den durch den mindestens einen Zusatzsensor erfassten Wert mit den in der Steuereinrichtung hinterlegten zulässigen Werten des mindestens einen Systemparameters. Bei einer Abweichung des erfassten Werts von den zulässigen Werten aktiviert die Steuereinrichtung die Temperiereinrichtung.

In Abhängigkeit des mindestens einen Systemparameters und der Abweichungsrichtung legt die Steuereinrichtung fest, ob die Temperiereinrichtung für einen Heizbetrieb oder für einen Kühlbetrieb aktiviert wird. Bei einer Abweichung des mindestens einen Systemparameters, die auf eine zu hohe Viskosität und damit eine zu niedrige Temperatur des Schmiermittels hinweist, wird die Temperiereinrichtung für einen Heizbetrieb aktiviert. In entsprechender Weise kann bei einer Abweichung des mindestens einen Systemparameters, die auf eine zu niedrige Viskosität und damit eine zu hohe Temperatur des Schmiermittels hinweist, die Temperiereinrichtung für einen Kühlbetrieb aktiviert werden.

Es ist möglich, dass sich das System in einem Ausgangszustand in einem zulässigen Zustand befindet, in dem der Wert des mindestens einen Systemparameters innerhalb der in der Steuereinrichtung hinterlegten zulässigen Werte liegt. Es ist auch möglich, dass sich das System in einem Ausgangszustand in einem unzulässigen Zustand befindet, in welchem der Wert des mindestens einen Systemparameters von den in der Steuereinrichtung hinterlegten zulässigen Werten abweicht.

Für den Fall, dass sich das System in einem Ausgangszustand bereits in einem zulässigen Zustand befindet, ist bei einem erfindungsgemäßen Verfahren zum Betrieb des erfindungsgemäßen Systems vorgesehen, dass die Steuereinrichtung die Temperiereinrichtung so ansteuert, dass der durch den mindestens einen Zusatzsensor erfasste Wert zunächst den zulässigen Wertebereich verlässt, wobei die Steuereinrichtung die Temperiereinrichtung anschließend so steuert, dass der Wert des mindestens einen Zusatzsensors wieder den zulässigen Bereich erreicht.

Für den Fall, dass sich das System in einem Ausgangszustand in einem unzulässigen Zustand befindet, ist bei einem erfindungsgemäßen Verfahren zum Betrieb des Systems vorgesehen, dass die Steuereinrichtung die Temperiereinrichtung so steuert, dass der Wert des mindestens einen Zusatzsensors den zulässigen Bereich erreicht.

Zusätzlich hierzu kann die Veränderung des mindestens einen Systemparameters auch durch veränderte Umgebungsbedingungen bewirkt werden, beispielsweise durch eine Anpassung der Betriebsparameter einer Vorrichtung, zu dessen Schmierung das System dient.

Weiter erfindungsgemäß ist vorgesehen, dass ausgehend von der Abweichung von den zulässigen Werten des mindestens einen Systemparameters eine erstmalige Erfassung eines zulässigen Werts des mindestens einen Systemparameters die Erfassung eines aktuellen Temperaturwerts des Schmiermittels durch den Temperatursensor auslöst. Dieser aktuelle Temperaturwert wird in der Steuereinrichtung als Temperaturreferenzwert gespeichert. Dieser Temperaturreferenzwert dient als Referenz für weitere Verfahrensschritte. Bei einer initial zu hohen Viskosität, d.h. einer initial zu niedrigen Temperatur, stellt der Temperaturreferenzwert die Untergrenze des zulässigen Temperaturbereichs dar. Bezogen auf den Energieverbrauch einer Temperiereinrichtung, die eine Heizeinrichtung umfasst, ist dieser Temperaturreferenzwert also ein bevorzugter Wert, da für eine Erwärmung des Schmiermittels auf einen höheren Temperaturwert mehr Energie benötigt wird.

Es ist bevorzugt, wenn die Steuereinrichtung eingerichtet ist, die Temperatur des Schmiermittels so zu steuern, dass der Temperaturreferenzwert erreicht wird, solange der zulässige Mindestwert des mindestens einen Systemparameters nicht unterschritten und solange der zulässige Maximalwert des mindestens einen Systemparameters nicht überschritten wird. Im Falle eines Temperaturreferenzwerts, der dem minimal zulässigen Temperaturwert entspricht, steuert die Steuereinrichtung die Temperiereinrichtung also so, dass gerade dieser minimale Temperaturwert erreicht wird. Dadurch kann ein energieeffizienter Betrieb des Systems ermöglicht werden.

Es ist ferner bevorzugt, dass die Steuerung der Temperatur des Schmiermittels unter Berücksichtigung der von dem Temperatursensor erfassten Temperatur erfolgt. Die Steuereinrichtung nutzt vorrangig den Temperaturwert des Schmiermittels als Grundlage für die Ansteuerung der Temperiereinrichtung, solange der Wert des mindestens eines Systemparameters innerhalb der in der Steuereinrichtung hinterlegten zulässigen Werte liegt. Bei Abweichungen des mindestens einen Systemparameters von den zulässigen Werten erfolgt durch die Steuereinrichtung eine gesonderte Ansteuerung der Temperiereinrichtung. Bevorzugt löst eine Abweichung auch eine erneute Festlegung des Temperaturreferenzwerts aus.

Ferner wird diese Aufgabe bei einem System der eingangs genannten Art dadurch gelöst, dass das System und/oder die Steuereinrichtung dazu eingerichtet ist, ein vorstehend beschriebenes Verfahren auszuführen.

In einer bevorzugten Ausführungsform umfasst das System einen Zentralbereich. In diesem Zentralbereich sind zumindest der Vorratsbehälter, die Pumpe zur Förderung des Schmiermittels, die Steuereinrichtung und die Temperiereinrichtung angeordnet, vorzugsweise auch der Temperatursensor. Ferner umfasst das System mindestens eine zu dem Zentralsystem räumlich beabstandet angeordnete Schmierstelle. Das System umfasst vorzugsweise mindestens zwei Schmierstellen, von denen mindestens eine zu dem Zentralbereich räumlich beabstandet ist. Vorzugsweise beträgt ein Abstand zwischen der mindestens einen Schmierstelle zu dem Zentralbereich mindestens 1 Meter, insbesondere mindestens 3 Meter. Ferner ist es für ein System mit mindestens zwei Schmierstellen bevorzugt, dass die mindestens zwei Schmierstellen relativ zueinander beabstandet sind, wobei ein Abstand zwischen zwei unterschiedlichen Schmierstellen mindestens 1 Meter, insbesondere mindestens 3 Meter beträgt.

Die sich zwischen der Pumpe und den mindestens zwei Schmierstellen erstreckende Leitung kann Verzweigungen und/oder entlang ihrer Längserstreckung voneinander abweichende Förderquerschnitte aufweisen. Es sind verschiedene Leitungsanordnungen möglich, beispielsweise ein sternförmiges Leitungsnetz mit einer Hauptleitung und mit mehreren Nebenleitungen, welche die Schmierstellen mit der Hauptleitung verbinden. Ebenso ist eine ringförmige Leitungsführung möglich, bei der eine Ringleitung alle Schmierstellen miteinander verbindet. In einer weiteren Ausführungsform sind die Schmierstellen direkt mit einzelnen Leitungen mit der Pumpe und/oder einem räumlich der Pumpe zugeordneten Verteiler verbunden. Die genannten Prinzipien der Leitungsführung können auch beliebig miteinander kombiniert werden, sodass beispielsweise mehrere Nebenleitungen verschiedene Hauptleitungen mit einer Vielzahl von Schmierstellen verbinden. Dies ermöglicht eine effiziente und bedarfsgerechte Bereitstellung des Schmiermittels an den Schmierstellen.

Bevorzugt ist es, wenn der zulässige Mindestwert des mindestens einen Systemparameters und/oder der zulässige Maximalwert des mindestens einen Systemparameters während einer Inbetriebnahme oder einer Wiederinbetriebnahme des Systems in der Steuereinrichtung hinterlegt wird oder werden. Dadurch kann das System an seinem Einsatzort kalibriert werden.

Es ist ferner bevorzugt, wenn die Temperiereinrichtung eine Heizeinrichtung zur Erwärmung des Schmiermittels umfasst. Durch die Erwärmung kann die Viskosität des Schmiermittels reduziert und damit dessen Förderfähigkeit erhöht sowie dessen innere Reibung verringert werden.

Zusätzlich oder alternativ hierzu kann die Temperiereinrichtung eine Kühleinrichtung zur Abkühlung des Schmiermittels umfassen. Durch die Kühlung kann die Viskosität des Schmiermittels erhöht werden, beispielsweise wenn das Schmiermittel durch Umgebungsbedingungen zu stark erwärmt wurde und folglich die Viskosität des Schmiermittels zu niedrig ist.

Im einfachsten Fall umfasst die Temperiereinrichtung ein Heizelement, beispielsweise eine elektrische Heizspirale, eine Heizpatrone oder ein Heizgebläse. Die Steuereinrichtung steuert ein solches Heizelement durch Vorgabe eines elektrischen Stroms. Bei einer möglichen Ausführungsform kann die Temperiereinrichtung zusätzlich oder alternativ hierzu einen Wärmetauscher umfassen. Beispielsweise kann zur Erwärmung des Schmiermittels eine Abwärme der Schmiermittelförderpumpe genutzt werden. Die Steuereinrichtung steuert einen solchen Wärmetauscher beispielsweise durch eine Anpassung einer Durchflussrate eines Abwärmestroms.

Die Übertragung der Werte, die durch den Temperatursensor und den mindestens einen Zusatzsensor erfasst wurden, kann kabelgebunden und/oder drahtlos, beispielsweise per Funk, erfolgen. In entsprechender Weise kann die Steuerung der Temperiereinrichtung durch die Steuereinrichtung kabelgebunden und/oder drahtlos erfolgen.

Es ist bevorzugt, wenn der mindestens eine Zusatzsensor mindestens einen von der Temperatur des Schmiermittels abweichenden Schmiermittelparameter erfasst. Dies ermöglicht eine direkte Erfassung des mindestens einen Systemparameters und eine kurze Reaktionszeit des Systems.

Es ist ferner bevorzugt, wenn der mindestens eine Zusatzsensor ein Sensor oder eine Gruppe von Sensoren zur Erfassung einer Dichte des Schmiermittels ist. Insbesondere ist bevorzugt, wenn der mindestens eine Zusatzsensor eine Dichte des in dem Vorratsbehälter bevorrateten Schmiermittels erfasst. Dies ermöglicht eine störungsarme Erfassung des mindestens einen Systemparameters. Eine Veränderung der Dichte deutet auf eine Veränderung der Temperatur und damit auch der Viskosität des Schmiermittels hin. Beispielsweise weist eine niedrigere Dichte des Schmiermittels auf eine höhere Temperatur sowie eine niedrigere Viskosität des Schmiermittels hin.

Zur Erfassung einer Dichte des Schmiermittels können einfache und kostengünstige Sensoren verwendet werden. Beispielsweise kann ein Füllstandssensor verwendet werden, der eine in dem Vorratsbehälter anliegende Füllhöhe des Schmiermittels erfasst. In Verbindung mit der (bekannten) Querschnittsfläche des Vorratsbehälters kann ein aktuelles Volumen des Schmiermittels bestimmt werden. Ferner kann eine Wiegeeinrichtung verwendet werden, welche das aktuelle Gewicht des in dem Vorratsbehälter bevorrateten Schmiermittels erfasst und daraus die aktuelle Masse des Schmiermittels ableitet. Die aktuelle Dichte des Schmiermittels ergibt sich in bekannter Weise als Quotient aus der aktuellen Masse und dem aktuellen Volumen.

Eine weitere Ausführungsform sieht vor, dass der mindestens eine Zusatzsensor mindestens einen Pumpenparameter erfasst, der eine Energieaufnahme der Pumpe und/oder eine Ausgangsleistung der Pumpe betrifft. Dies ermöglicht eine einfache Erfassung des mindestens einen Systemparameters und ermöglicht zudem Rückschlüsse auf die Belastung der Pumpe.

Es ist möglich und bevorzugt, dass der mindestens eine Zusatzsensor ein Sensor zur Erfassung einer Position und/oder eines Bewegungszustands eines Förderelements der Pumpe ist. Beispielsweise kann durch den mindestens einen Zusatzsensor die Position eines Förderkolbens einer Kolbenpumpe erfasst werden. Eine zu niedrige Geschwindigkeit und/oder eine zu geringe Frequenz und/oder eine zu große zeitliche Verzögerung bei der Aktivierung des Förderkolbens weist auf ein schlechtes Förderverhalten des Schmiermittels und damit auf eine hohe Viskosität und eine niedrige Temperatur des Schmiermittels hin. Diese Ausführungsform ermöglicht es außerdem, einen Belastungszustand der Pumpe zu erfassen. Dadurch kann einer Überlastung der Pumpe - zumindest mittelbar - entgegengewirkt werden.

Es ist ferner möglich und bevorzugt, dass der mindestens eine Zusatzsensor ein Sensor zur Erfassung eines Strombedarfs eines Antriebsmotors der Pumpe ist. Beispielsweise kann der Strombedarf eines Antriebsmotors einer Radialkolbenpumpe erfasst werden. Ein erhöhter Strombedarf weist auf ein schlechtes Förderverhalten des Schmiermittels und damit auf eine hohe Viskosität sowie eine niedrige Temperatur des Schmiermittels hin. Diese Ausführungsform ermöglicht es außerdem, einen Belastungszustand des Antriebsmotors zu erfassen. Dadurch kann einer Überlastung des Antriebsmotors - zumindest mittelbar - entgegengewirkt werden.

Bei einer weiteren bevorzugten Ausführungsform ist der mindestens eine Zusatzsensor ein Sensor zur Erfassung einer Betriebstemperatur der Pumpe. Eine hohe Betriebstemperatur weist auf ein schlechtes Förderverhalten des Schmiermittels und damit auf eine hohe Viskosität sowie eine niedrige Temperatur des Schmiermittels hin. Diese Ausführungsform ermöglicht es außerdem, einen Belastungszustand der Pumpe zu erfassen. Dadurch kann einer Überlastung der Pumpe - zumindest mittelbar - entgegengewirkt werden.

Eine weitere bevorzugte Ausführungsform sieht vor, dass der mindestens eine Zusatzsensor ein Drucksensor ist oder als Teil eines Druckschalters einen Drucksensor umfasst. Der Drucksensor erfasst mindestens einen Leitungsparameter, der einen Druck des Schmiermittels in der Leitung betrifft. Ein hoher Druck weist auf ein schlechtes Förderverhalten des Schmiermittels und damit auf eine hohe Viskosität des Schmiermittels sowie eine niedrige Temperatur des Schmiermittels hin. Durch diese Ausführungsform kann der mindestens eine Systemparameter einfach und präzise erfasst werden.

Bei einer weiteren bevorzugten Ausführungsform ist der mindestens eine Zusatzsensor ein Bewegungssensor. Dieser erfasst mindestens einen Schmierstellenparameter, der eine Vibrationsbewegung der Schmierstelle betrifft. Beispielsweise lassen erhöhte Vibrationen an der Schmierstelle auf zu wenig Schmierstoff und damit auf ein schlechtes Förderverhalten des Schmiermittels schließen. Daraus können eine hohe Viskosität des Schmiermittels und eine niedrige Temperatur des Schmiermittels abgeleitet werden. Diese Ausführungsform ermöglicht eine einfache und anwendungsorientierte Erfassung des mindestens einen Systemparameters.

Nachfolgend werden weitere bevorzugte Ausgestaltungen der Erfindung erläutert.

Es ist möglich und bevorzugt, dass eine Ermittlung des Temperaturreferenzwerts gemäß dem zuvor beschriebenen Vorgehen wiederholt werden kann. Diese Ermittlung kann in regelmäßigen Abständen erfolgen, beispielsweise als turnusmäßige Rekalibrierung. Zusätzlich oder alternativ hierzu kann die Ermittlung auch anlassbezogen erfolgen, beispielsweise nach einer Veränderung der Umgebungsbedingungen oder einer Anpassung der Betriebsparameter einer mit dem System verbundenen Vorrichtung.

Ferner ist es vorteilhaft, wenn das System und/oder das Verfahren zum Betrieb des Systems an verschiedene Schmiermittel anpassbar ist. Die in der Steuereinrichtung hinterlegten Werte des mindestens einen Systemparameters sind dabei wahlweise abhängig von dem Schmiermittel oder bevorzugt unabhängig von dem Schmiermittel. Für jedes eingesetzte Schmiermittel wird gemäß dem zuvor beschriebenen Vorgehen ein Temperaturreferenzwert erfasst, bei dem der Wert des mindestens eines Systemparameters einen zulässigen Wert aufweist. Dadurch kann berücksichtigt werden, dass verschiedene Schmiermittel unterschiedlich temperiert werden müssen, um die gleichen Fördereigenschaften aufzuweisen.

In entsprechender Weise kann das System und/oder das Verfahren zum Betrieb des Systems auch an unterschiedliche Umgebungsbedingungen und unterschiedliche Längen der Leitung angepasst werden. Beispielsweise steigt der Reibungswiderstand bei der Förderung eines Schmiermittels in einer Leitung im Allgemeinen mit der Länge der Leitung an. Folglich muss die Viskosität des Schmiermittels reduziert und somit die Temperatur des Schmiermittels erhöht werden. Diese Anpassung kann durch eine erneute Erfassung des Referenztemperaturwerts erfolgen.

Es ist ferner vorteilhaft, wenn ein Austausch von Daten zwischen der Steuereinrichtung des Systems und einer Steuereinrichtung einer mit dem System verbundenen Vorrichtung - zumindest mittelbar - erfolgen kann. Diese Daten betreffen insbesondere den nächsten Schmierungszeitpunkt in diskontinuierlich und/oder zyklisch betriebenen und/oder zyklisch geschmierten Vorrichtungen. Dadurch kann die Steuereinrichtung Abweichungen der aktuellen Temperatur von dem in der Steuereinrichtung als zulässig hinterlegten Temperaturreferenzwert und/oder des mindestens einen Systemparameters von den in der Steuereinrichtung hinterlegten Werten in Zeiträumen gezielt zulassen, in denen keine Schmierung vorgesehen ist. Die Steuereinrichtung kann die Temperatur des Schmiermittels rechtzeitig vor dem nächsten Schmierungszeitpunkt auf den Temperaturreferenzwert anpassen, sodass die in der Steuereinrichtung hinterlegten zulässigen Werte des mindestens einen Systemparameters zu dem Schmierungszeitpunkt eingehalten werden. Beispielsweise erfolgt die Schmierung einer Kette in zyklischen Abständen von mehreren Stunden. Wenn der Steuereinrichtung des Systems der nächste Schmierzeitpunkt bekannt ist, kann diese die Temperatur des Schmiermittels reduzieren, beispielsweise durch Ausschalten der Temperiereinrichtung. Die Steuereinrichtung kann die Temperatur des Schmiermittels rechtzeitig vor dem nächsten Schmierungszeitpunkt entsprechend erhöhen, sodass die festgelegten Fördereigenschaften des Schmiermittels erfüllt werden. Dadurch kann der Energieverbrauch des Systems reduziert und dessen Effizienz erhöht werden.

Es ist ferner vorteilhaft, wenn das System (insbesondere dessen Steuereinrichtung) die Zeitpunkte der vergangenen Schmierungen erfasst und diese in einem Speicher abspeichert. Durch Rechenoperationen kann die Steuereinrichtung auf Basis der Zeitpunkte der vergangenen Schmierungen Prognosen für zukünftige Schmierungszeitpunkte aufstellen. Die Steuereinrichtung kann die Temperiereinrichtung in Zeiträumen mit geringer prognostizierter Wahrscheinlichkeit einer Schmierung ausschalten und/oder mit reduzierter Leistung betreiben. Rechtzeitig vor Zeiträumen mit hoher prognostizierter Wahrscheinlichkeit einer Schmierung kann die Steuereinrichtung die Temperiereinrichtung so ansteuern, dass der in der Steuereinrichtung gespeicherte Temperaturreferenzwert und damit die gewünschten Fördereigenschaften des Schmiermittels rechtzeitig erreicht werden. Dieses Vorgehen ermöglicht einen energieeffizienten Betrieb des Systems, insbesondere bei Verwendung des Systems in Verbindung mit Vorrichtungen mit diskontinuierlicher Schmierung und zeitlich variablen Schmierungszeitpunkten.

Weitere Merkmale und Vorteile der Erfindung sind Gegenstand der nachfolgenden Beschreibung bevorzugter Ausführungsbeispiele.

In der Zeichnung zeigt:
- Fig. 1: eine schematische Darstellung des Aufbaus einer Ausführungsform eines erfindungsgemäßen Systems mit einem Zusatzsensor, wobei der Zusatzsensor ein Sensor zur Erfassung eines Schmiermittelparameters ist;
- Fig. 2: eine schematische Darstellung des Aufbaus einer alternativen Ausführungsform eines erfindungsgemäßen Systems mit einem Zusatzsensor, wobei der Zusatzsensor ein Sensor zur Erfassung eines Pumpenparameters ist;
- Fig. 3: eine schematische Darstellung des Aufbaus einer weiteren Ausführungsform eines erfindungsgemäßen Systems mit einem Zusatzsensor, wobei der Zusatzsensor ein Sensor zur Erfassung eines Leitungsparameters ist;
- Fig. 4: eine schematische Darstellung des Aufbaus einer weiteren Ausführungsform eines erfindungsgemäßen Systems mit einem Zusatzsensor, wobei der Zusatzsensor ein Bewegungssensor zur Erfassung der Vibrationsbewegung der Schmierstelle ist; und
- Fig. 5: ein Ablaufdiagramm eines erfindungsgemäßen Verfahrens zum Betrieb eines Systems zur Schmierung mindestens einer Schmierstelle.

In der Zeichnung ist eine Ausführungsform eines erfindungsgemäßen Systems mit dem Bezugszeichen 10 bezeichnet. Das System 10 umfasst einen Zentralbereich 12, der einen Vorratsbehälter 14, eine Pumpe 16 zur Förderung eines Schmiermittels 18, eine Steuereinrichtung 20, eine Temperiereinrichtung 22 und einen Temperatursensor 24 zur Bestimmung der aktuellen Temperatur des Schmiermittels 18.

Die Temperiereinrichtung 22 ist über eine Datenleitung 23 mit der Steuereinrichtung 20 verbunden. Der Temperatursensor 24 ist über eine Datenleitung 25 mit der Steuereinrichtung 20 verbunden. Bevorzugt bestimmt der Temperatursensor 24 die Temperatur des in dem Vorratsbehälter 14 befindlichen Schmiermittels 18.

Der Vorratsbehälter 14 ist mit der Pumpe 16 über eine Leitung 26 verbunden. Ferner umfasst das System zwei Schmierstellen 28, 30 die zu dem Zentralbereich 12 räumlich beabstandet angeordnet sind. Die Schmierstellen 28, 30 sind durch ein Leitungsnetz 32 mit der Pumpe 16 verbunden. Diese fördert das Schmiermittel 18 durch das Leitungsnetz 32 zu den Schmierstellen 28, 30. Das Leitungsnetz 32 umfasst eine Hauptleitung 34 sowie zwei Nebenleitungen 36, 38, welche die Schmierstellen 28, 30 mit der Hauptleitung 34 verbinden.

Das System 10 dient zur Schmierung einer Vorrichtung 50, beispielsweise einer Produktionsanlage. Vorzugsweise umfasst die Vorrichtung 50 mindestens eine eigene Steuereinrichtung 52, welche über eine Datenleitung 54 mit der Steuereinrichtung 20 des Systems 10 verbunden ist. Die beiden Steuereinrichtungen 20, 52 können wahlweise einseitig oder bevorzugt wechselseitig Daten austauschen.

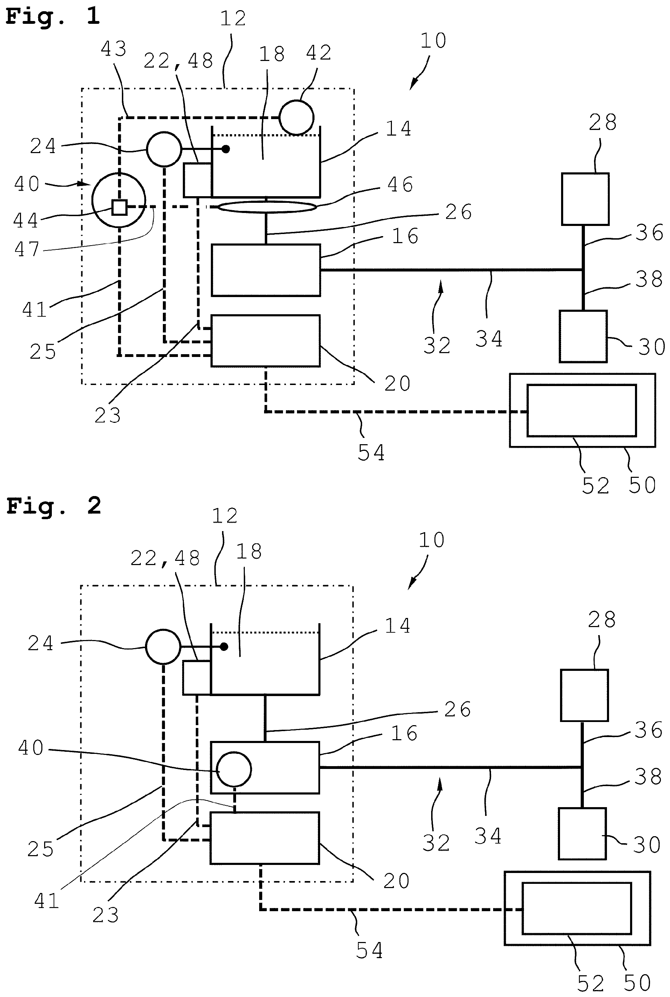

Bei der in Fig. 1 dargestellten ersten Ausführungsform erfasst der Zusatzsensor 40 die Dichte des Schmiermittels 18 als einen Schmiermittelparameter und leitet entsprechende Dichte-Werte über eine Datenleitung 41 an die Steuereinrichtung 20 weiter. Dabei ermittelt ein dem Zusatzsensor 40 zugeordneter Füllstandsensor 42 die Füllhöhe des Schmiermittels 18 im Vorratsbehälter 14. Diese Daten werden über eine Datenleitung 43 an eine dem Zusatzsensor 40 zugeordnete Recheneinheit 44 übertragen. Zusammen mit der Querschnittsfläche des Vorratsbehälters 14 kann die Recheneinrichtung 44 das Volumen des in dem Vorratsbehälter 14 befindlichen Schmiermittels 18 berechnen. Eine Wiegeeinrichtung 46 ermittelt das Gewicht des in dem Vorratsbehälter 14 befindlichen Schmiermittels 18 und übermittelt entsprechende Gewichts-Werte über eine Datenleitung 47 an die Recheneinheit 44. Die Recheneinheit 44 berechnet aus den ermittelten Daten die Dichte des Schmiermittels 18.

Etwaige Veränderungen der Dichte des Schmiermittels 18 während des Betriebs des Systems 10 werden durch den Zusatzsensor 40 erfasst und über die Datenleitung 41 an die Steuereinrichtung 20 weitergeleitet. Eine Veränderung der Dichte deutet auf eine Veränderung der Temperatur und damit eine Veränderung der Viskosität des Schmiermittels 18 hin. Beispielsweise weist eine niedrigere Dichte des Schmiermittels 18 auf eine höhere Temperatur sowie eine niedrigere Viskosität des Schmiermittels 18 hin.

In der Steuereinrichtung 20 sind ein zulässiger Mindestwert der Dichte des Schmiermittels 18 und ein zulässiger Maximalwert der Dichte des Schmiermittels 18 hinterlegt. Die Steuereinrichtung 20 verarbeitet den Wert der Dichte des Schmiermittels 18 und/oder dessen Änderung und steuert - in Abhängigkeit des Werts der Dichte - die Temperiereinrichtung 22 an. Die Temperiereinrichtung 22 ist insbesondere als Heizeinrichtung 48 wirksam und kann das in dem Vorratsbehälter 14 befindliche Schmiermittel 18 erwärmen. Dadurch kann die Viskosität des Schmiermittels 18 reduziert und dessen Förderfähigkeit verbessert werden.

In der Zeichnung in Fig. 2 ist eine alternative Ausführungsform eines erfindungsgemäßen Systems dargestellt. Der Grundaufbau des Systems 10 entspricht dem Aufbau des in Fig. 1 dargestellten Systems 10. Anstelle eines Schmiermittelparameters erfasst der Zusatzsensor 40 der in Fig. 2 dargestellten alternativen Ausführungsform den Wert mindestens eines Parameters der Pumpe 16. Der mindestens eine Zusatzsensor erfasst beispielsweise die Position eines Förderkolbens einer Kolbenpumpe und/oder die Drehfrequenz einer mit dem Kolben verbundenen Kurbelwelle. Die von dem Zusatzsensor 40 erfassten Werte werden als Daten über eine Datenleitung 41 an die Steuereinrichtung übertragen.

Die Steuereinrichtung 20 verarbeitet den Wert des Pumpenparameters und/oder dessen Änderung und steuert - in Abhängigkeit des Werts des Pumpenparameters - die Temperiereinrichtung 22 an.

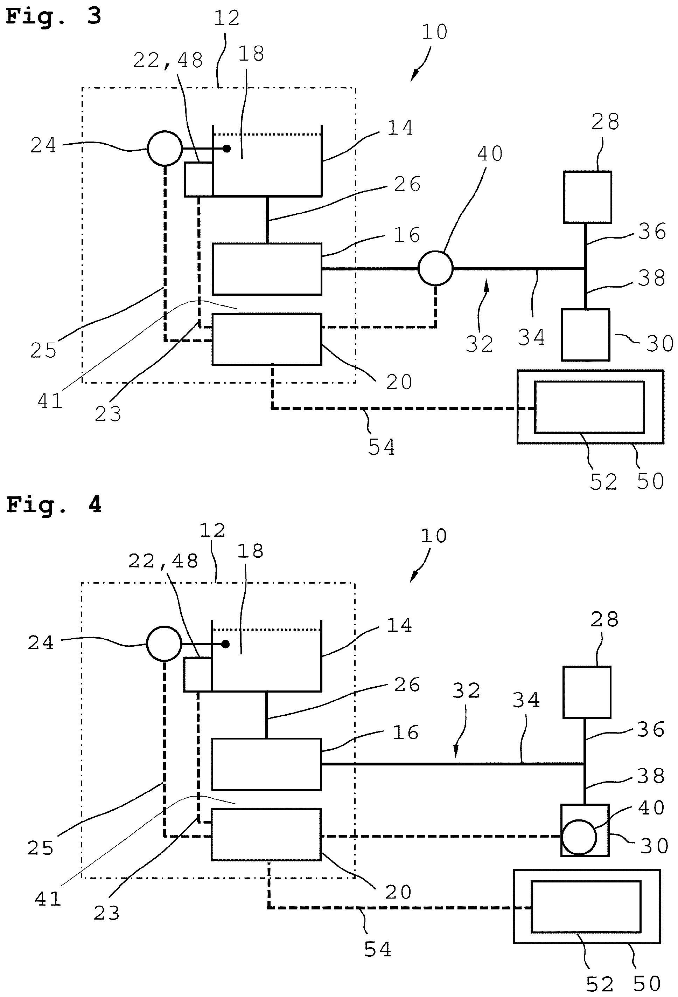

Die Zeichnung in Fig. 3 zeigt eine weitere Ausführungsform des Systems 10. Der Grundaufbau des Systems 10 entspricht dem Aufbau der in den Figuren 1 und 2 dargestellten Systeme, wobei der Zusatzsensor 40 einen Parameter des Leitungsnetzes 32 erfasst. Der Zusatzsensor 40 ist insbesondere ein Drucksensor, der den Druck des in dem Leitungsnetz 32 befindlichen Schmiermittels 18 erfasst. Die von dem Zusatzsensor 40 erfassten Druck-Werte werden als Daten über eine Datenleitung 41 an die Steuereinrichtung übertragen.

Die Steuereinrichtung 20 verarbeitet den Wert des Leitungsparameters und/oder dessen Änderung und steuert - in Abhängigkeit des Werts des Leitungsparameters - die Temperiereinrichtung 22 an.

Die Zeichnung in Fig. 4 zeigt eine weitere Ausführungsform des Systems 10. Der Grundaufbau des Systems 10 entspricht dem

Aufbau der in den Figuren 1, 2 und 3 dargestellten Systeme, wobei der Zusatzsensor 40 ein Bewegungssensor ist und einen Schmierstellenparameter erfasst, der die Amplitude und/oder die Frequenz einer Vibrationsbewegung der Schmierstelle betrifft. Die von dem Zusatzsensors 40 erfassten Werte werden über eine Datenleitung 41 an die Steuereinrichtung übertragen.

Die Steuereinrichtung 20 verarbeitet den Wert des Schmierstellenparameters und/oder dessen Änderung und steuert - in Abhängigkeit des Werts des Schmierstellenparameters - die Temperiereinrichtung 22 an.

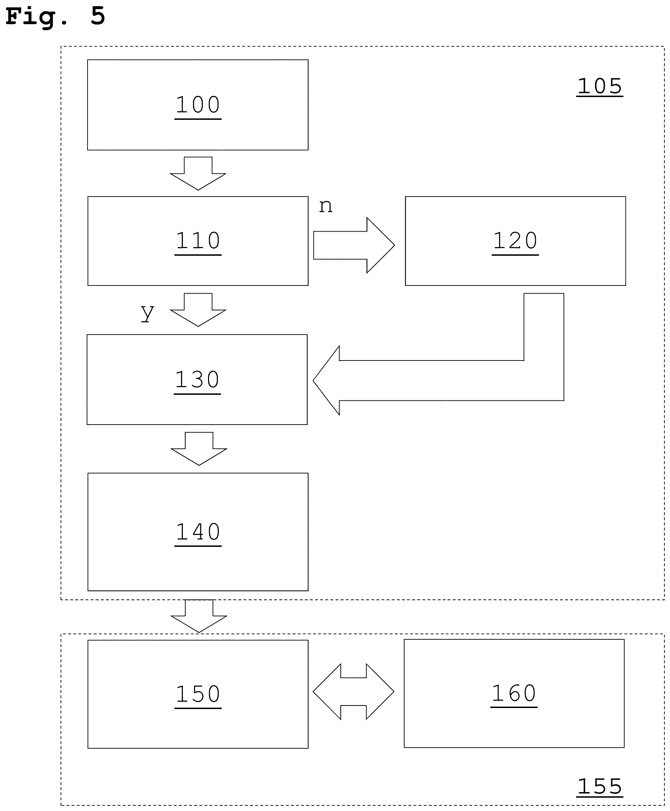

Die Figur 5 zeigt ein Ablaufdiagramm eines erfindungsgemäßen Verfahrens zum Betrieb eines Systems 10 zur Schmierung mindestens einer Schmierstelle 28, 30, insbesondere eines erfindungsgemäßen Systems 10. Dabei betreffen eine erste Gruppe 105 von Verfahrensschritten eine Kalibrierung des Systems 10 und eine zweite Gruppe 155 von Verfahrensschritten eine Nutzung des kalibrierten Systems 10.

In einem Ausgangszustand, der einem ersten Schritt 100 entspricht, wird ein zulässiger Mindestwert des mindestens einen Systemparameters und/oder ein zulässiger Maximalwert des mindestens einen Systemparameters festgelegt und in der Steuereinrichtung 20 hinterlegt.

In einem zweiten Schritt 110 erfasst ein Zusatzsensor 40 eines der vorstehend mit Bezug auf die Figuren 1 bis 4 beschriebenen Systems 10 einen Wert des mindestens einen Systemparameters, und die Steuereinrichtung 20 prüft diesen Wert auf eine Abweichung zu den in der Steuereinrichtung 20 hinterlegten zulässigen Werten.

Wird während des zweiten Schritts 110 keine Abweichung festgestellt (siehe in Figur 5: "n" für englisch no = nein), wird ein Zusatzschritt 120 ausgeführt. In dem Zusatzschritt 120 steuert die Steuereinrichtung 20 die Temperiereinrichtung 22 so, dass der Wert des mindestens einen Systemparameters von den zulässigen Werten abweicht.

Wird während des zweiten Schritts 110 eine Abweichung des mindestens einen Systemparameters von den zulässigen Werten erkannt (siehe in Figur 5: "y" für englisch yes = ja), wird ein dritter Schritt 130 ausgeführt. In dem dritten Schritt 130 steuert die Steuereinrichtung 20 die Temperiereinrichtung 22 so, dass der Wert des mindestens einen Systemparameters einen zulässigen Wert annimmt. Diese Steuerung geht korreliert insbesondere mit einer Erwärmung des Schmiermittels 18.

Wird während des dritten Schritts 130 durch den Zusatzsensor 40 (erstmalig wieder) ein zulässiger Wert des mindestens einen Systemparameters erfasst, wird in einem folgenden vierten Schritt 140 die Erfassung eines aktuellen Temperaturwerts des Schmiermittels 18 durch den Temperatursensor 24 ausgelöst. Der erfasste Temperaturwert wird als Temperaturreferenzwert in der Steuereinrichtung 20 abgespeichert. Dieser Temperaturreferenzwert liegt vorzugsweise an der unteren Grenze des zulässigen Wertebereichs, d.h. bei dieser Temperatur wird der zulässige Minimalwert zwar erreicht, jedoch nicht oder nur geringfügig überschritten. Dadurch wird eine nachfolgend beschriebene, energieeffiziente Nutzung des Systems 10 ermöglicht:
In einem Schritt 150 steuert die Steuereinrichtung 20 die Temperiereinrichtung 22 so, dass der Temperaturreferenzwert erreicht wird. Die Steuereinrichtung 20 nutzt dabei vorrangig den Temperaturwert des Schmiermittels 18 als Grundlage für die Ansteuerung der Temperiereinrichtung 22. Zusätzlich erfolgt eine Prüfung, ob der Wert des mindestens einen Systemparameters in dem zulässigen Bereich liegt, d.h. ob der zulässige Mindestwert des mindestens einen Systemparameters nicht unterschritten und der zulässige Maximalwert des mindestens einen Systemparameters nicht überschritten wird. Bei Abweichungen des mindestens einen Systemparameters von den zulässigen Werten erfolgt durch die Steuereinrichtung 20 eine gesonderte Ansteuerung der Temperiereinrichtung 22.

Es ist möglich, dass eine festgestellte Abweichung des mindestens einen Systemparameters von den zulässigen Werten eine erneute Durchführung aller oder eines Teils der Verfahrensschritte der Gruppe 105 auslöst.

Auch bei einem Wechsel des Schmiermittels 18 und/oder bei einer Anpassung des Leitungsnetzes 32 können alle oder Teile der Verfahrensschritte der Gruppe 105 erneut durchlaufen werden.

In einem optionalen Schritt 160 ermittelt die Steuereinrichtung 20 auf Basis der Zeitpunkte der vergangenen Schmiervorgänge und/oder auf Basis der Daten, die zwischen der Steuereinrichtung 20 des Systems 10 mit der Steuereinrichtung 52 der Vorrichtung 50 ausgetauscht wurden, die nächsten Schmierungszeitpunkte oder eine Wahrscheinlichkeit, dass innerhalb eines zukünftigen Zeitraums ein Schmiervorgang durchgeführt wird. In Zeiträumen, in denen keine Schmierung stattfindet oder zumindest unwahrscheinlich ist, lässt die Steuereinrichtung 20 eine Abweichung der aktuellen Temperatur des Schmiermittels 18 von dem Temperaturreferenzwert und/oder eine Abweichung des Werts des mindestens einen Systemparameters von den in der Steuereinrichtung 20 hinterlegten zulässigen Werten absichtlich zu. Rechtzeitig vor dem nächsten prognostizierten Schmierungszeitpunkt steuert die Steuereinrichtung 20 die Temperiereinrichtung 22 so an, dass die Temperatur des Schmiermittels 18 den Temperaturreferenzwert wieder erreicht und die Werte des mindestens einen Systemparameters im zulässigen Wertebereich liegen. Dadurch kann der Energieverbrauch des Systems reduziert und eine störungsarme Schmierung gewährleistet werden.

## Patentansprüche

1. Verfahren zum Betrieb eines Systems (10) zur Schmierung mindestens einer Schmierstelle (28, 30), wobei das System (10)
- einen Vorratsbehälter (14) zur Bevorratung von Schmiermittel (18),
- eine Leitung (32) zur Führung des Schmiermittels von dem Vorratsbehälter (18) zu der Schmierstelle (28, 30),
- eine Pumpe (16) zur Förderung des Schmiermittels (18) von dem Vorratsbehälter (14) zu der Schmierstelle (28, 30),
- eine Temperiereinrichtung (22) zur Temperierung des in dem Vorratsbehälter (14) bevorrateten Schmiermittels (18),
- einen Temperatursensor (24) zur Erfassung einer Temperatur des Schmiermittels (18),
- eine mit dem Temperatursensor (24) gekoppelte Steuereinrichtung (20) zur Steuerung der Temperiereinrichtung (22), und
- mindestens einen mit der Steuereinrichtung (20) gekoppelten Zusatzsensor (40) zur Erfassung eines von der Temperatur des Schmiermittels (18) abweichenden Systemparameters des Systems, der sich während des Betriebs des Systems (10) in Abhängigkeit eines Betriebszustands des Systems (10) und/oder von Umgebungsbedingungen des Systems (10) ändert, umfasst,
**dadurch gekennzeichnet,**
- **dass** die Steuereinrichtung (20) die Temperiereinrichtung (22) bei einem durch den mindestens einen Zusatzsensor (40) erfassten Wert, der innerhalb der in der Steuereinrichtung (20) hinterlegten zulässigen Werten des mindestens einen Systemparameters liegt, so steuert, dass der durch den mindestens einen Zusatzsensor (40) erfasste Wert den zulässigen Wertebereich verlässt, wobei die Steuereinrichtung (20) die Temperiereinrichtung (22) anschließend so steuert, dass der Wert des mindestens einen Zusatzsensors (40) wieder den zulässigen Bereich erreicht, und/oder
- **dass** die Steuereinrichtung (20) die Temperiereinrichtung (22) bei einem durch den mindestens einen Zusatzsensor (40) erfassten Wert, der außerhalb der in der Steuereinrichtung (20) hinterlegten zulässigen Werten des mindestens einen Systemparameters liegt, so steuert, dass der Wert des mindestens einen Zusatzsensors (40) den zulässigen Bereich erreicht, und dass ausgehend von der Abweichung von den zulässigen Werten des mindestens einen Systemparameters eine erstmalige Erfassung eines zulässigen Werts des mindestens einen Systemparameters die Erfassung eines aktuellen Temperaturwerts des Schmiermittels (18) durch den Temperatursensor (24) auslöst, und
**dass** der aktuelle Temperaturwert in der Steuereinrichtung (20) als Temperaturreferenzwert gespeichert wird.

2. Verfahren nach Anspruch 1, **dadurch gekennzeichnet, dass** die Steuereinrichtung (20) eingerichtet ist, die Temperatur des Schmiermittels (18) so zu steuern, dass der Temperaturreferenzwert erreicht wird, solange der zulässige Mindestwert des mindestens einen Systemparameters nicht unterschritten und solange der zulässige Maximalwert des mindestens einen Systemparameters nicht überschritten wird.

3. Verfahren nach Anspruch 2, **dadurch gekennzeichnet, dass** die Steuerung der Temperatur des Schmiermittels unter Berücksichtigung der von dem Temperatursensor (24) erfassten Temperatur erfolgt.

4. System (10) zur Schmierung mindestens einer Schmierstelle (28, 30), umfassend
- einen Vorratsbehälter (14) zur Bevorratung von Schmiermittel (18),
- eine Leitung (32) zur Führung des Schmiermittels von dem Vorratsbehälter (18) zu der Schmierstelle (28, 30),
- eine Pumpe (16) zur Förderung des Schmiermittels (18) von dem Vorratsbehälter (14) zu der Schmierstelle (28, 30),
- eine Temperiereinrichtung (22) zur Temperierung des in dem Vorratsbehälter (14) bevorrateten Schmiermittels (18),
- einen Temperatursensor (24) zur Erfassung einer Temperatur des Schmiermittels (18),
- eine mit dem Temperatursensor (24) gekoppelte Steuereinrichtung (20) zur Steuerung der Temperiereinrichtung (22), und
- mindestens einen mit der Steuereinrichtung (20) gekoppelten Zusatzsensor (40) zur Erfassung eines von der Temperatur des Schmiermittels (18) abweichenden Systemparameters des Systems, der sich während des Betriebs des Systems (10) in Abhängigkeit eines Betriebszustands des Systems (10) und/oder von Umgebungsbedingungen des Systems (10) ändert,
**dadurch gekennzeichnet,**
**dass** das System (10) und/oder die Steuereinrichtung (20) dazu eingerichtet ist, ein Verfahren nach einem der vorstehenden Ansprüche auszuführen.

5. System (10) nach Anspruch 4, **dadurch gekennzeichnet, dass** das System (10) einen Zentralbereich (12) umfasst, wobei in dem Zentralbereich (12) zumindest der Vorratsbehälter (14), die Pumpe (16) zur Förderung des Schmiermittels (18), die Steuereinrichtung (20) und die Temperiereinrichtung (22), vorzugsweise auch der Temperatursensor (24), angeordnet sind, und wobei das System (10) mindestens eine zu dem Zentralbereich (12) räumlich beabstandete Schmierstelle (28, 30) umfasst.

6. System (10) nach Anspruch 4 oder 5, **dadurch gekennzeichnet, dass** die Temperiereinrichtung (22) eine Heizeinrichtung (48) zur Erwärmung des Schmiermittels (18) und/oder eine Kühleinrichtung zur Abkühlung des Schmiermittels (18) umfasst.

7. System (10) nach einem der Ansprüche 4 bis 6, **dadurch gekennzeichnet, dass** der mindestens eine Zusatzsensor (40) mindestens einen von der Temperatur des Schmiermittels (18) abweichenden Schmiermittelparameter erfasst.

8. System (10) nach Anspruch 7, **dadurch gekennzeichnet, dass** der mindestens eine Zusatzsensor (40) ein Sensor oder eine Gruppe von Sensoren zur Erfassung einer Dichte des Schmiermittels (18) ist, insbesondere einer Dichte des in dem Vorratsbehälter (14) bevorrateten Schmiermittels (18).

9. System (10) nach einem der Ansprüche 4 bis 8, **dadurch gekennzeichnet, dass** der mindestens eine Zusatzsensor (40) mindestens einen Pumpenparameter erfasst, der eine Energieaufnahme der Pumpe (16) und/oder eine Ausgangsleistung der Pumpe (16) betrifft.

10. System (10) nach Anspruch 9, **dadurch gekennzeichnet, dass** der mindestens eine Zusatzsensor (40) ist:
- ein Sensor zur Erfassung einer Position und/oder eines Bewegungszustands eines Förderelements der Pumpe (16), und/oder
- ein Sensor zur Erfassung eines Strombedarfs eines Antriebsmotors der Pumpe (16), und/oder
- ein Sensor zur Erfassung einer Betriebstemperatur der Pumpe (16).

11. System (10) nach einem der Ansprüche 4 bis 10, **dadurch gekennzeichnet, dass** der mindestens eine Zusatzsensor (40) ein Drucksensor ist oder als Teil eines Druckschalters einen Drucksensor umfasst, wobei der Drucksensor mindestens einen Leitungsparameter erfasst, der einen Druck des Schmiermittels in der Leitung (32) betrifft.

12. System (10) nach einem der Ansprüche 4 bis 11, **dadurch gekennzeichnet, dass** der mindestens eine Zusatzsensor (40) ein Bewegungssensor ist und mindestens einen Schmierstellenparameter erfasst, der eine Vibrationsbewegung der Schmierstelle (28, 30) betrifft.
